# EUROPÄISCHE PATENTSCHRIFT

(11) **EP 4 106 507 B1**
(45) Veröffentlichungstag und Bekanntmachung des Hinweises auf die Patenterteilung: **03.04.2024**
(21) Anmeldenummer: 21708158.7
(22) Anmeldetag: 18.02.2021
(51) Int. Cl.: A01B 79/02, A01B 79/00, A01C 21/00

(54) **VERFAHREN ZUR ERHÖHUNG EINES HUMUSGEHALTS IN EINEM BODEN**
METHOD FOR INCREASING THE HUMUS CONTENT OF SOIL
PROCÉDÉ POUR AUGMENTER LA TENEUR EN HUMUS DU SOL

(30) Priorität: 19.02.2020 DE 102020202140
(43) Veröffentlichungstag der Anmeldung: 28.12.2022
(73) Patentinhaber: Adam, Gerhard, 92715 Püchersreuth (DE)
(72) Erfinder: Adam, Gerhard, 92715 Püchersreuth (DE)
(74) Vertreter: Rau, Schneck & Hübner Patentanwälte Rechtsanwälte PartGmbB
(86) Internationale Anmeldenummer: PCT/EP2021/054047
(87) Internationale Veröffentlichungsnummer: WO 2021/165409

(56) Entgegenhaltungen:
- AT-B- 301 234
- CN-A- 109 076 910
- DE-A1- 3 037 430
- DE-A1- 4 226 486
- DE-A1- 10 349 321
- DE-U1- 9 401 375

## Beschreibung

Die vorliegende Patentanmeldung nimmt die Priorität der deutschen Patentanmeldung DE 10 2020 202 140.6 in Anspruch.

Die Erfindung betrifft ein Verfahren zur Erhöhung eines Humusgehalts in einem Boden, beispielsweise in einem landwirtschaftlich genutzten Boden, wie in einem Feld, gemäß dem Oberbegriff des Anspruchs 1.

Humus ist bekanntlich Teil der gesamten organischen Bodensubstanz. Er ist der Aktivität von Bodenorganismen ausgesetzt, die durch ihren Stoffwechsel laufend zum Auf-, Um- oder Abbau des Humus beitragen. Im Boden findet ein ständiger Abbau und Aufbau von Humus statt. Es ist bekannt, dass der Humusgehalt in Böden unterschiedlich ist. Er ist beispielsweise von einem Bodenhorizont, einer Pflanzendecke, vom Klima, der Bodenfeuchte und/oder Bodennutzung bzw. Bodenbearbeitung abhängig. Beispielsweise führt eine zu häufige Bodenbearbeitung mit schweren Bearbeitungsmaschinen ohne Auflockerung des Bodens zu einer Verdichtung des Bodens, die wiederum eine Humusbildung mindert.

Die CN 109076910 A betrifft eine gattungsgemäße landwirtschaftliche Bepflanzung, insbesondere ein Kultivierungsverfahren von Konjac. Zur Anwendung des Verfahrens wird zunächst Kulturland tief umgedreht. Danach werden Stalldünger, Volldünger und Kalidünger als Basisdünger ausgebracht. Vor einem Säen wird Mulch mit Erde verdichtet. Wachstumsdünger soll während der starken Wachstumsphase ausgebracht werden. Der Wachstumsdünger umfasst Kalziumnitrat und Magnesiumsulfat. Das Wachstum der Pflanzen ist nicht optimal. Ferner umfasst der Boden in der Regel eine nicht zufriedenstellende Zusammensetzung.

Die DE 94 01 375 U1 offenbart eine Vorrichtung zur Pflege und Pflanz- oder Saatvorbereitung land- und gartenbaulich genutzter Kulturböden. Aus dieser Druckschrift ist es bekannt, Kulturböden mittels geeigneter Gartenbearbeitungsgeräte, wie Pflug, Spaten, Egge, Kultivator, aufzulockern und ggf. mit natürlichem oder anderem Dünger sowie Pflanzenteilen anzureichem, indem dieser Dünger in den Boden unter dessen Oberfläche eingebracht wird. Für den Einsatz der Vorrichtung verbleiben nach einer Ernteperiode geerntete Pflanzenreste auf einer Bodenfläche. Alternativ werden auf den Bodenflächen Pflanzenrestbestandteile oder Gründung ausgebracht. Sie werden gleichmäßig verteilt.

In der AT 301 234 B ist ein Maiserntegerät offenbart. Ferner ist es aus dieser Druckschrift bekannt, dass Maisstängel beim Ernteverfahren unerwünscht seien und auf dem Felde verbleiben würden. In einem nachfolgenden Arbeitsgang würden die Maisstängel zerkleinert und durch Unterpflügung einer raschen Verrottung zugeführt. Bei dem Maiserntegerät werden von einer Pflückeinrichtung durchgezogene Stängel von Maispflanzen erfasst und zerschlagen. Die so zerkleinerten Maisstängel fallen auf den Boden, wo sie, ggf. durch Unterpflügen, der Verrottung zugeführt werden.

Aus der DE 103 49 321 A1 ist ein Verfahren zur Ermittlung einer Strohverteilung und Einarbeitungsqualität von Stroh und/oder Pflanzen in einen Boden bekannt. Eine Bodenbearbeitungsmaschine wird gesteuert und geregelt. Die Steuerung wird so genutzt, dass eine optimale Einarbeitung von Stroh und Pflanzen in den Boden erreicht wird.

Aus der DE 30 37 430 A1 ist ein Verfahren zur Unkrautbekämpfung bei Nutzpflanzen bekannt. Unmittelbar nach dem Einbringen eines Saatguts in einen Boden wird eine Saatzeile mit Nutzpflanzenresten, die vorzugsweise angerottet sind, abgedeckt. Es ist zweckmäßig, als Nutzpflanzenreste das bei der Ernte von Mais und Getreide anfallende Stroh in zerkleinerter Form zu verwenden. Ferner sei es durch offenkundige Vorbenutzung bekannt, die nach der Ernte vorhandenen Pflanzenreste zu zerkleinern und gleichmäßig über den Boden zu verteilen, wo diese Pflanzenreste untergepflügt oder sonst wie in den Boden eingebracht würden.

Die DE 42 26 486 A1 offenbart ein Direktsaatverfahren und eine Vorrichtung zur Durchführung dieses Verfahrens. Organische Pflanzenrückstände und Erdreich im unmittelbaren Bereich einer Säreihe werden gleichzeitig zur Seite gedrückt, sodass an der Ablagestelle für das Saatkorn die erforderlichen Ablage- und Keimbedingungen geschaffen werden.

Die DE 94 01 375 U1 offenbart eine Vorrichtung zur Pflege und Pflanz- oder Saatvorbereitung land- und gartenbaulich genutzter Kulturböden.

Der Erfindung liegt die Aufgabe zugrunde, ein Verfahren zur Erhöhung des Humusgehalts in einem Boden bereitzustellen, das besonders funktionssicher und effizient ist. Das Verfahren soll außerdem äußerst umweltfreundlich bzw. ressourcenschonend sein.

Diese Aufgabe wird erfindungsgemäß durch die in dem unabhängigen Anspruch 1 angegebenen Merkmale gelöst. Der Kern der Erfindung liegt in dem zumindest teilweisen Einbringen der Pflanzenteile, wie Blätter, Blüten, Stängel, Knospen und/oder Früchte, der dort wachsenden Pflanzen in den Boden, insbesondere in dessen obere Schicht, wodurch dort Humus entsteht bzw. dessen Entstehung angeregt wird. Nutzpflanzen können so dort in dem Boden besonders gut wachsen bzw. sich entwickeln.

Es wird der Magnesiumgehalt (Mg-Gehalt) des Bodens bestimmt und geprüft. Überraschend hat sich gezeigt, dass der richtige Magnesiumgehalt des Bodens für den Erfolg des erfindungsgemäßen Verfahrens mit ausschlaggebend ist. Innerhalb der Pflanze sorgt Magnesium zum Beispiel für die Stabilität von Zellmembranen. Es ist außerdem insbesondere ein wichtiger Bestandteil des Nukleinsäuremechanismus und Cofaktor für zahlreiche Enzyme. Fehlendes Magnesium zeigt sich in der Pflanze vor allem in einer Abnahme der Photosynthese und einer darauffolgenden Färbung des Blatts der Pflanze. Bleibt der Magnesiummangel über einen längeren Zeitraum bestehen, kommt es häufig zu einer frühzeitigen Alterung der Pflanze.

Es wird der Kalziumgehalt (Calciumgehalt, Ca-Gehalt) des Bodens bestimmt und geprüft. Überraschend hat sich gezeigt, dass der richtige Kalziumgehalt des Bodens für den Erfolg des erfindungsgemäßen Verfahrens mit ausschlaggebend ist. Kalzium wird für viele Prozesse in der Pflanze benötigt, vor allem für den Wachstumsprozess. In den Zellen der Pflanze hat Kalzium insbesondere eine regulierende Wirkung und es trägt zum Beispiel zur Stabilität der Pflanze bei. Bei einem Kalziummangel zeigen häufig zuerst die älteren, größeren Blätter der Pflanze Mangelerscheinungen. Flecken entstehen auf den Blättern.

Das Erhöhen des Magnesiumgehalts auf einen Soll-Magnesiumgehalt in dem Boden erfolgt durch die Zugabe von Magnesium, beispielsweise in Form eines Mineraldüngers, wie Magnesiumdüngers bzw. magnesiumhaltigen Düngers.

Das Erhöhen des Kalziumgehalts auf einen Soll-Kalziumgehalt in dem Boden geschieht durch die Zugabe von Kalzium, beispielsweise in Form eines Mineraldüngers, wie Kalziumdüngers bzw. kalziumhaltigen Düngers.

Günstigerweise bleiben die Wurzeln der Pflanzen in dem Boden und auch ungestört, sodass die Pflanzen imstande sind, nachzuwachsen. Es ist zweckmäßig, wenn zumindest 70 %, bevorzugt zumindest 80 %, bevorzugt zumindest 90 %, bevorzugt alle, der oberhalb der Wurzeln sich befindenden Pflanzenteile der Pflanzen in den Boden zu dessen Verbesserung, wie Düngung, eingebracht werden.

Das erfindungsgemäße Verfahren ist beispielsweise im Acker-, Obst-, Wein- und/oder Gartenbau einsetzbar. Es ist beispielsweise imstande, den Ertrag und/oder die innere funktionale Qualität von Nutzpflanzen zu steigern, die in dem Boden wurzeln bzw. wachsen. Die Nutzpflanzen finden beispielsweise als Nahrungsmittel, Genussmittel, Heilpflanzen, Viehfutter oder Rohstoffe Anwendung.

Weitere vorteilhafte Ausgestaltungen der Erfindung sind in den Unteransprüchen angegeben.

Bei den Gründüngungspflanzen gemäß dem Unteranspruch 2 und gemäß einer bevorzugten Ausführungsform verwendeten Untersaaten handelt es sich um Pflanzen, die gezielt zur Bodenverbesserung angepflanzt werden. Die Gründüngungspflanzen und/oder auch Untersaaten sorgen beispielsweise für eine Beschattung des Bodens und mindern zum Beispiel den Aufprall von Regentropfen auf den Boden. Die Bodenstruktur wird durch die Durchwurzelung des Bodens verbessert. Der Zustand des Bodens und Lebensbedingungen von Bodenlebewesen werden so verbessert, was letztendlich auch zu besseren Wachstumsbedingungen für die Gründüngungspflanzen und Nutzpflanzen führt. Die Gründüngungspflanzen sind beispielsweise Schmetterlingsblütler, Hülsenfrüchtler/Leguminosen und/oder Gräser. Der Einsatz von Gräsern hat den Vorteil, dass diese bereits während des Wachstums eine sogenannte Nährphotosynthese durchführen. Beispielsweise befinden sich zwischen den Gründüngungspflanzen auch Untersaaten.

Die Ausgestaltung gemäß dem Unteranspruch 3 erlaubt zum Beispiel die frühzeitige Erkennung, ob die Pflanzen gesund sind und ordnungsgemäß wachsen bzw. sich entwickeln. Gegebenenfalls ist so ein rechtzeitiges Eingreifen möglich.

Das Unterstützen der Pflanzen in ihrem Wachstum und/oder in ihrer Entwicklung gemäß dem Unteranspruch 4 ist beispielsweise durch den Einsatz von Dünger, wie von organischem Dünger, wie Mulch, Komposte oder tierischen Ausscheidungen, mineralischem Dünger oder Langzeitdünger möglich. Der Dünger ist imstande, das Nährstoffangebot für die Pflanzen zu ergänzen. Er enthält beispielsweise Stickstoff, Phosphat, Schwefel und/oder Kalium. Die von den Pflanzen aufgenommenen Nährstoffe werden fast ausschließlich als geladene Teilchen (Ionen) aufgenommen. Beispielsweise werden tierische Ausscheidungen direkt von Nutztieren, wie Weiderindern, auf den Boden ausgebracht. Alternativ oder zusätzlich wird für das Unterstützen der Pflanzen in ihrem Wachstum und/oder in ihrer Entwicklung eine Bearbeitung/Vitalisierung des Bodens, wie mechanischer Art, insbesondere durch Auflockern (oben und/oder in der Tiefe) und/oder Durchlüften, durchgeführt. Es ist zweckmäßig, wenn der Boden imstande ist, Sauerstoff aufzunehmen. Alternativ oder zusätzlich wird für das Unterstützen der Pflanzen in ihrem Wachstum und/oder in ihrer Entwicklung eine Krankheits-, Schädlings- und/oder Beikrautregulierung durchgeführt.

Das mechanische Einbringen bzw. Einarbeiten der Pflanzenteile in den Boden gemäß dem Unteranspruch 5 ist besonders wirtschaftlich durchführbar. Große Flächen sind so in vergleichsweise kurzer Zeit mit den Pflanzenteilen versorgbar.

Die Ausgestaltung gemäß dem Unteranspruch 6 erlaubt, dass die Wurzeln in dem Boden ungestört bleiben. Das Schneiden der Pflanzen erfolgt beispielsweise durch Mähen. Die Pflanzen werden so bevorzugt in ihrer Höhe reduziert, was deren Wachstum anregt. Es ist zweckmäßig, wenn der Pflanzenschnitt vollständig in den Boden eingebracht wird.

Die Ausgestaltung gemäß dem Unteranspruch 7 führt zu einem Boden, der zumindest den Großteil des Jahres, bevorzugt das ganze Jahr, Pflanzen beheimatet und wachsen lässt. Das den Boden enthaltende Feld ist günstigerweise zumindest den Großteil des Jahres, vorzugsweise das ganze Jahr, grün. Bevorzugt sind das ganze Jahr grüne Bestände auf dem Feld, sodass das ganze Jahr durch das Pflanzenwachstum Bodenlebewesen im Boden leben und aktiv sind, was die Humusbildung verstärkt und den Humusgehalt erhöht.

Die Ausgestaltung gemäß dem Unteranspruch 8 erlaubt festzustellen, ob der Humusgehalt des Bodens verbesserungswürdig bzw. erhöhbar ist. Ein natürlicher Boden hat im Durchschnitt einen Humusgehalt zwischen 0,5 % und 2,5 %. Ein Soll-Humusgehalt des Bodens liegt hier bei mindestens 6 %, bevorzugt zwischen 8 % und 12 %. Der Humusgehalt des Bodens ist beispielsweise mittels eines Elementaranalysators, insbesondere in einem Labor, bestimmbar.

Das Einstellen des Magnesium-Kalzium-Verhältnisses auf ein Soll-Magnesium-Kalzium-Verhältnis in dem Boden gemäß dem Unteranspruch 9 ist für den Erfolg des erfindungsgemäßen Verfahrens wichtig. Bei sandigen Böden liegt der Kalziumgehalt beispielsweise zwischen 60 Gew.-% und 70 Gew.-% und der Magnesiumgehalt zum Beispiel zwischen 10 Gew.-% und 20 Gew.-%. Bei tonigen Böden liegt der Kalziumgehalt beispielsweise zwischen 65 Gew.-% und 75 Gew.-% und der Magnesiumgehalt zwischen 5 Gew.-% und 15 Gew.-%.

Es ist von Vorteil, wenn sämtliche Nährstoffe in Abhängigkeit einer Beschaffenheit des Bodens zueinander passen.

Das Verfahren gemäß dem Unteranspruch 10 ist besonders vorteilhaft. Die Pflanzen bzw. Sämlinge, insbesondere Gründüngungspflanzen bzw. Gründüngungssämlinge, zeigen dann ein besonders starkes Wachstum bzw. eine äußerst gute Entwicklung.

Es ist zweckmäßig, wenn gemäß dem Unteranspruch 12 der Kohlenstoffzyklus bzw. Kohlenstoffkreislauf der Erde, insbesondere gezielt, beeinflusst, wie beschleunigt, gesteigert bzw. gesteuert, wird.

Kohlendioxid aus der Umgebung, also gasförmiger Kohlenstoff, wird in dem Kohlenstoffzyklus beispielsweise von den Pflanzen aufgenommen, die wiederum durch den Vorgang der Photosynthese daraus Kohlenhydrate/Zucker, insbesondere Glukose bzw. Traubenzucker (flüssiger Kohlenstoff), und Sauerstoff produzieren. Der von den Pflanzen wiederum abgegebene produzierte Sauerstoff bildet die Lebensgrundlage für Lebewesen.

Bodenlebewesen/Mikroorganismen wandeln in dem Kohlenstoffzyklus im Boden die/den von den Pflanzen produzierten Kohlenhydrate bzw. Zucker in andere kohlenstoffhaltige Produkte (fester Kohlenstoff) um. Die Abgabe der Kohlenhydrate bzw. des Zuckers der Pflanzen an den Boden bzw. die dort lebenden Bodenlebewesen/Mikroorganismen erfolgt über Wurzeln der Pflanzen. Durch die Versorgung des Bodens bzw. der dort lebenden Bodenlebewesen/Mikroorganismen mit Kohlenhydraten/Zucker bzw. flüssigen kohlenstoffhaltigen Produkten erfolgt deren Bindung in dem Boden zu festen kohlenstoffhaltigen Produkten.

Durch Erhöhen eines Kohlendioxidgehalts der Umgebungsluft der Pflanzen, beispielsweise auf Werte zwischen 500 ppm und 1000 ppm, ist im Allgemeinen die Photosynthese der Pflanzen steigerbar. Eine Anpassung der Umgebungstemperatur der Pflanzen an deren Bedürfnisse, wie Erhöhung der Temperatur der Umgebungsluft der Pflanzen, bevorzugt auf mindestens 10° C, bevorzugt auf mindestens 15° C, bevorzugt auf mindestens 20° C, bevorzugt auf mindestens 25° C, sofern notwendig, führt im Allgemeinen zu einer Steigerung der Photosynthese der Pflanzen, was beispielsweise im Allgemeinen deren Wachstum begünstigt. Bei gesteigerter Photosynthese geben die Pflanzen mehr Kohlenhydrate/Zucker an den Boden ab, wodurch die Bildung anderer, insbesondere fester, kohlenstoffhaltiger Produkte im Boden als Humusbestandteil erhöht wird. Durch das Versorgen bzw. Füttern der Bodenlebewesen/Mikroorganismen mit festen kohlenstoffhaltigen Produkten wird besonders viel bzw. guter Humus gebildet, der zu einem besonders guten Pflanzenwachstum führt.

Insbesondere bei der Nährphotosynthese erfolgt eine Aufnahme des gasförmigen Kohlenstoffs, insbesondere von Kohlendioxid, und/oder die Umwandlung in Kohlenhydrate/Zucker bzw. flüssige Kohlenstoffprodukte. Für die Abgabe kohlenstoffhaltiger Produkte durch die Pflanzen an den Boden bzw. Bodenlebewesen ist das Nährstoffverhältnis, insbesondere Magnesium-Kalzium-Verhältnis, im Boden ausschlaggebend. Je genauer das für die jeweilige Pflanze benötigte bzw. ideale Verhältnis getroffen bzw. gewählt wird, desto schneller erfolgt der Transport von Kohlenstoffverbindungen (Assimilat) in der Pflanze. Es werden dann auch entsprechend mehr Kohlenstoffverbindungen (wie Traubenzucker) an den Boden abgegeben. Die Pflanzen verwenden im Allgemeinen einen ersten Teil des aufgenommenen Kohlenstoffs bzw. der aufgenommenen Kohlenstoffverbindungen für ihr eigenes Wachstum und einen zweiten Teil für ihre Vermehrung. Ein dritter Teil des aufgenommenen Kohlenstoffs bzw. der aufgenommenen Kohlenstoffverbindungen, der für das Pflanzenwachstum und die Pflanzenvermehrung überschüssig ist, wird dabei im Allgemeinen an den Boden abgegeben. Je besser das Nährstoffverhältnis im Boden für die jeweilige Pflanze ist, desto gesünder ist die Pflanze und desto mehr kohlenstoffhaltige Produkte bzw. Kohlenstoffverbindungen werden von der Pflanze an den Boden abgegeben, was zu einer Erhöhung des Humusgehalts in dem Boden führt.

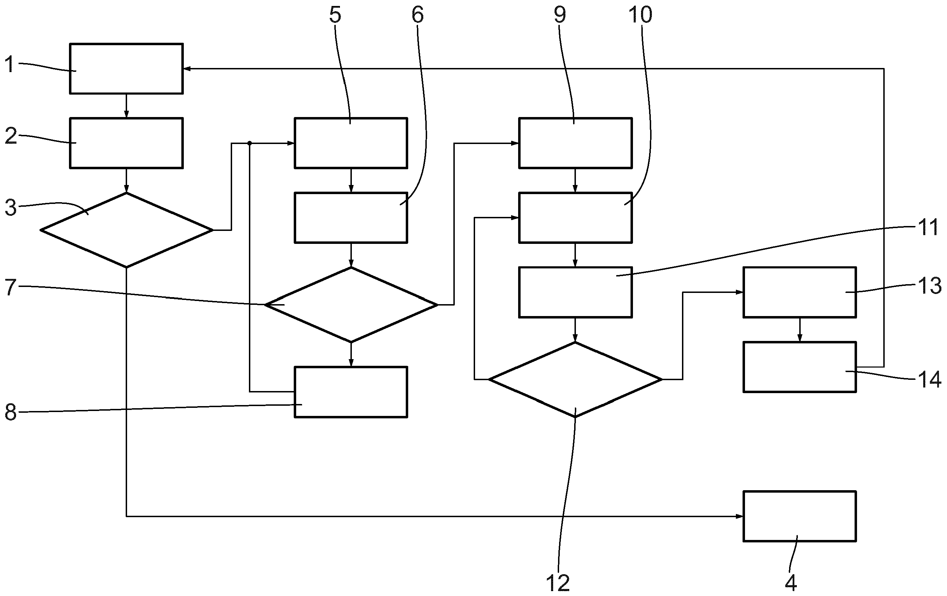

Nachfolgend wird unter Bezugnahme auf die beigefügte Zeichnung eine bevorzugte Ausführungsform des erfindungsgemäßen Verfahrens beispielhaft beschrieben. Die einzige Figur zeigt ein Ablaufschema des erfindungsgemäßen Verfahrens.

In einem Schritt 1 des in der Figur schematisch veranschaulichten Verfahrens werden Bodenproben aus dem Boden entnommen, dessen Humusgehalt zu erhöhen ist. Die Probennahme erfolgt beispielsweise manuell mithilfe eines Probenstechers oder Spatens. Es ist zweckmäßig, wenn an mehreren unterschiedlichen Stellen des Bodens Bodenproben entnommen werden. Die Bodenproben bzw. das entnommene Bodenmaterial müssen/muss repräsentativ für den Boden sein. Es ist von Vorteil, wenn die Bodenproben im Frühjahr oder Herbst, bevorzugt bei einer Mindestbodentemperatur von 6 °C, entnommen werden.

Anschließend wird in einem Schritt 2 der Humusgehalt des Bodens mittels der entnommenen Bodenproben bestimmt. Eine Bestimmung ist beispielsweise mittels eines Glühverlustes möglich. Die Bodenproben werden zunächst gesiebt und getrocknet. Sie werden dann in einen Ofen gestellt, wo organische Bestandteile der Bodenproben verbrennen. Anhand einer Gewichtsdifferenz der Bodenproben vor und nach der Behandlung im Ofen kann auf den Gesamtgehalt der organischen Substanz und somit auf den Humusgehalt in den Bodenproben und somit in dem Boden in Gew.-% geschlossen werden.

Anschließend wird nach einer Bestimmung des Humusgehalts der Bodenproben und somit des Bodens (Ist-Humusgehalt) in einem Schritt 3 entschieden bzw. bewertet, ob der bestimmte Humusgehalt einem Soll-Humusgehalt entspricht oder nicht entspricht.

Falls der bestimmte Humusgehalt des Bodens dem Soll-Humusgehalt entspricht, werden in einem Schritt 4 Nutzpflanzen bzw. ein Nutzpflanzen-Saatgut ausgesät. Die Sämlinge bilden ihre Wurzeln in dem Boden. Die Nutzpflanzen wachsen dann dort besonders gut.

Falls bei dem Schritt 3 festgestellt wird, dass der Humusgehalt der Bodenproben und somit des Bodens nicht dem Soll-Humusgehalt entspricht bzw. zu niedrig ist, werden in einem Schritt 5 neue Bodenproben aus dem Boden analog zu dem Schritt 1 entnommen, dessen Humusgehalt zu steigern ist.

Anschließend werden in einem Schritt 6 der Magnesium- und Kalziumgehalt der neuen Bodenproben bestimmt. Alternativ wird bei dem Schritt 6 der Magnesium- und Kalziumgehalt der bei dem Schritt 1 entnommenen Bodenproben bestimmt. Der Schritt 5 ist dann hinfällig.

Zur Bestimmung des Magnesiumgehalts werden die Bodenproben zum Beispiel zunächst getrocknet. Erdkluten, sofern vorhanden, werden zerschlagen. Feinmaterial wird abgesiebt. Die Bodenproben werden in Schüttelbehältnisse eingewogen. Für die Bestimmung des Magnesiumgehalts wird eine CaCh-Lösung zu den Bodenproben zudosiert. Durch Schütteln werden die Nährstoffe aus den Bodenproben gelöst. Über Filter werden analysefertige Filtrate gewonnen. Die Bestimmung des Magnesiumgehalts der Bodenproben und somit des Bodens erfolgt zum Beispiel mit einem Atomabsorptionsspektrometer. Es kommt zu einem Ionenaustausch zwischen Kalzium und Magnesium, wodurch sorbierte Ionen erfasst werden.

Der Kalziumgehalt der Bodenproben und somit des Bodens kann ebenfalls zum Beispiel mit einem Atomabsorptionsspektrometer bestimmt werden.

Alternativ kann er beispielsweise mittels eines Teststreifens bestimmt werden.

Eine Bodenuntersuchung zur Bestimmung des Magnesium- und Kalziumgehalts nach Albrecht ist auch durchführbar. Eine Kationenaustauschkapazität wird dazu analysiert. Die Kationenaustauschkapazität ist ein Maß für die Menge der im Boden in austauschbarer und damit pflanzenverfügbarer Form vorliegenden Nährstoffkationen, wie Ca²⁺ bzw. Mg²⁺.

Anschließend wird in einem Schritt 7 entschieden bzw. bewertet, ob der Magnesiumgehalt, Kalziumgehalt und/oder das Magnesium-Kalzium-Verhältnis der Bodenproben und somit des Bodens in Ordnung ist/sind bzw. jeweils in einem Sollbereich liegen.

Falls die Bewertung bei dem Schritt 7 ergeben hat, dass der Magnesiumgehalt und/oder der Kalziumgehalt zu niedrig ist/sind, wird in einem Schritt 8 gezielt Magnesium und/oder Kalzium dem Boden zugefügt, um den Magnesiumgehalt, Kalziumgehalt und/oder das Magnesium-Kalzium-Verhältnis des Bodens zu verbessern bzw. in Ordnung zu bringen, sodass dieses einem Sollgehalt bzw. Sollverhältnis entspricht.

Anschließend wird wieder zu dem Schritt 5 zurückgekehrt.

Falls die Bewertung bei dem Schritt 7 ergeben hat, dass der Magnesiumgehalt, der Kalziumgehalt und/oder das Magnesium-Kalzium-Verhältnis in Ordnung ist/sind, wird in einem Schritt 9 eine Saat von Gründüngungspflanzen ausgebracht. Die Sämlinge bilden Wurzeln in dem Boden aus. Die Gründüngungspflanzen wachsen und entwickeln sich. Gleichzeitig oder später können beispielsweise auch Untersaaten ausgebracht werden. Die Sämlinge der Untersaaten bilden Wurzeln in dem Boden aus und wachsen.

Anschließend wird in einem Schritt 10 der Boden mechanisch aufgelockert. Gleichzeitig wird Dünger ausgebracht. Mineralische Nährstoffe bilden überflüssige, nicht für das Wachsen der Pflanze benötigte Kohlenhydrate bzw. Traubenzucker. Diese versorgen das Bodenleben, wodurch Humus aufgebaut wird und sich der Humusgehalt in dem Boden erhöht. Alternativ erfolgt der Schritt 10 zeitlich vor oder mit dem Schritt 9.

Anschließend wird in einem Schritt 11 das Wachstum der Gründüngungspflanzen kontrolliert. Dies kann durch eine optische Kontrolle erfolgen. Beispielsweise wird ein Wachstum in die Höhe pro festgelegter Zeitdauer gemessen.

Anschließend wird in einem Schritt 12 bewertet bzw. entschieden, ob das Wachstum der Gründüngungspflanzen einem Soll-Wachstum entspricht bzw. in Ordnung ist.

Falls das Wachstum der Gründüngungspflanzen nicht dem Soll-Wachstum entspricht und zu gering ist, wird zu dem Schritt 10 zurückgekehrt.

Falls das Wachstum der Gründüngungspflanzen einem Soll-Wachstum entspricht, werden in einem Schritt 13 die Gründüngungspflanzen, insbesondere maschinell, gemäht.

Anschließend wird in einem Schritt 14 der Gründüngungspflanzenschnitt vollständig in den Boden, insbesondere in dessen obere Schicht, mechanisch, beispielsweise mittels einer Ackerfräse, eingebracht bzw. eingearbeitet. Der Gründüngungspflanzenschnitt wird in einer Tiefe zwischen 1 cm und 3 cm mit dem Boden vermischt. Aus dem in den Boden flach eingebrachten Gründüngungspflanzenschnitt und beispielsweise außerdem in den Boden flach eingebrachten Zwischenfrüchten und/oder Verrottung von Untersaaten dort entsteht Humus, was den Humusgehalt in dem Boden erhöht.

Anschließend wird zu dem Schritt 1 zurückgekehrt. Das Verfahren wird, falls notwendig, mehrfach, gegebenenfalls über Jahre, durchgeführt, um den gewünschten Humusgehalt zu erzielen.

Ein humoser Oberboden ist maßgeblich für das Pflanzenwachstum, da er lebensnotwendige Mineral- und Nährstoffe enthält. Der Humus bietet auch einen wichtigen Lebensraum für Bodenlebewesen und Pflanzen. Er wirkt auch als Speicher für die Pflanzenwelt, da er ein hohes Wasser- und Nährstoffbindevermögen hat. Ein Überschwemmungsrisiko wird reduziert. Eine Zunahme des Humusgehalts um 1 % (pro Hektar) bedeutet eine Zunahme der Wasseraufnahmekapazität des Bodens um ca. 400.000 1 pro Hektar. Der Humus ist auch imstande, Schadstoffe zu speichern bzw. zu filtern, was sich auch positiv auf das Grundwasser auswirkt. Weiterhin werden Auswaschungen von Nitraten, die in das Grundwasser gelangen können, vermieden bzw. reduziert. Bei einer Zunahme des Humusgehalts um 1 % (pro Hektar), kann der Boden etwa 2.500 kg Stickstoff zusätzlich speichem. Bodenerosion ist reduzierbar. Der Treibhauseffekt ist durch Speicherung von Kohlendioxid in dem Boden reduzierbar. Der Humus weist etwa 57 % Kohlenstoff auf. Während der Humusbildung wird der Kohlenstoff in dem Boden gebunden und Sauerstoff wieder in die Atmosphäre abgegeben. Eine Zunahme des Humusgehalts um 1 % (pro Hektar) sorgt pro Hektar für eine Bindung von etwa 30 t bis 60 t Kohlendioxid. Der Humusgehalt ist mitverantwortlich für die Bodeneigenschaften und Bodenfunktionen. Das geschilderte Verfahren ist imstande, eine Neubildung, Entstehung bzw. Regeneration von Humus zu erreichen, was den Humusgehalt im Boden erhöht. Es ist wesentlich effektiver bzw. ergiebiger als die natürliche Bildung von Humus.

## Patentansprüche

1. Verfahren zur Erhöhung eines Humusgehalts in einem Boden, umfassend die Schritte
- zumindest teilweises Einbringen von oberhalb von Wurzeln sich befindenden Pflanzenteilen in dem Boden wurzelnder Pflanzen in den Boden,
**gekennzeichnet durch**
- Prüfen eines Magnesiumgehalts des Bodens vor dem zumindest teilweisen Einbringen der Pflanzenteile in den Boden,
- Prüfen eines Kalziumgehalts des Bodens vor dem zumindest teilweisen Einbringen der Pflanzenteile in den Boden,
- Einstellen eines Magnesiumgehalts zwischen 5 Gew.-% und
20 Gew.-% in dem Boden, sofern ein bisheriger Magnesiumgehalt des Bodens davon abweicht, und
- Einstellen eines Kalziumgehalts zwischen 60 Gew.-% und
75 Gew.-% in dem Boden, sofern ein bisheriger Kalziumgehalt des Bodens davon abweicht.

2. Verfahren nach Anspruch 1, **dadurch gekennzeichnet, dass** die Pflanzen Gründüngungspflanzen sind.

3. Verfahren nach Anspruch 1 oder 2, **gekennzeichnet durch** Kontrollieren eines Wachstums und/oder einer Entwicklung der Pflanzen.

4. Verfahren nach einem der vorherigen Ansprüche, **gekennzeichnet durch** Unterstützen der Pflanzen in ihrem Wachstum und/oder in ihrer Entwicklung vor dem zumindest teilweisen Einbringen der Pflanzenteile in den Boden.

5. Verfahren nach einem der vorherigen Ansprüche, **dadurch gekennzeichnet, dass** das zumindest teilweise Einbringen der Pflanzenteile in den Boden mechanisch, beispielsweise durch Unterpflügen und/oder Fräsen, erfolgt.

6. Verfahren nach einem der vorherigen Ansprüche, **gekennzeichnet durch** Schneiden der Pflanzen vor dem zumindest teilweisen Einbringen der Pflanzenteile in den Boden und zumindest teilweises Einbringen eines Pflanzenschnitts in den Boden.

7. Verfahren nach einem der vorherigen Ansprüche, **dadurch gekennzeichnet, dass** die Pflanzen zumindest 70 %, bevorzugt zumindest 80 %, bevorzugt zumindest 90 %, bevorzugt zumindest 95 %, bevorzugt zumindest 99 %, eines Jahres sich mit ihren Wurzeln in dem Boden befinden.

8. Verfahren nach einem der vorherigen Ansprüche, **gekennzeichnet durch** Bestimmen des Humusgehalts des Bodens vor dem zumindest teilweisen Einbringen der Pflanzenteile in den Boden.

9. Verfahren nach einem der vorherigen Ansprüche, **gekennzeichnet durch** Einstellen eines Magnesium-Kalzium-Verhältnisses bei sandigen Böden zwischen 60 Gew.-% und 70 Gew.-% Kalzium und zwischen 10 Gew.-% und 20 Gew.-% Magnesium und bei tonigen Böden zwischen 65 Gew.-% und 75 Gew.-% Kalzium und zwischen 5 Gew.-% und 15 Gew.-% Magnesium in dem Boden, sofern ein bisheriges Magnesium-Kalzium-Verhältnis des Bodens davon abweicht.

10. Verfahren nach einem der vorherigen Ansprüche, **gekennzeichnet durch** Säen von Pflanzen-Saatgut und/oder Einpflanzen von Pflanzen in den Boden, wenn der Magnesiumgehalt und Kalziumgehalt und/oder das Magnesium-Kalzium-Verhältnis des Bodens jeweils dem Sollwert entspricht/entsprechen.

11. Verfahren nach einem der vorherigen Ansprüche **gekennzeichnet durch** Säen von Nutzpflanzen-Saatgut und/oder Einpflanzen von Nutzpflanzen in den Boden, wenn der Humusgehalt des Bodens einem Sollwert entspricht.

12. Verfahren nach einem der vorherigen Ansprüche, **gekennzeichnet durch** Beeinflussen eines Kohlenstoffzyklus zur Erhöhung des Humusgehalts in dem Boden,
- insbesondere Beeinflussen, insbesondere Steigern, einer Photosynthese der Pflanzen, beispielsweise durch Erhöhen eines Kohlendioxidgehalts der Umgebungsluft und/oder durch Anpassen einer Umgebungstemperatur der Pflanzen an diese, und/oder
- insbesondere Beeinflussen, insbesondere Steigern, einer Abgabe kohlenstoffhaltiger Produkte durch die Pflanzen an den Boden bzw. Bodenlebewesen, und/oder
- insbesondere Beeinflussen, insbesondere Steigern, eines Kohlenstoffgehalts in dem Boden.

## Claims

1. A method for increasing a humus content of soil, comprising the steps of
- at least partly introducing into the soil above-the-root plant parts of plants rooted in the soil,
**characterized by**
- testing a magnesium content of the soil before at least partly introducing the plant parts into the soil,
- testing a calcium content of the soil before at least partly introducing the plant parts into the soil,
- adjusting a magnesium content of the soil to between 5 wt% and 20 wt%, if a previous magnesium content of the soil deviates therefrom, and
- adjusting a calcium content of between 60 wt% and 75wt% in the soil, if a previous calcium content of the soil deviates therefrom.

2. A method according to claim 1, **characterized in that** the plants are green manure plants.

3. A method according to claim 1 or 2, **characterized by** controlling growth and/or development of the plants.

4. A method according to any one of the preceding claims, **characterized by** supporting the plants in their growth and/or development prior to at least partly introducing the plant parts into the soil.

5. A method according to any one of the preceding claims, **characterized in that** at least partly introducing the plant parts into the soil is carried out mechanically, for example by ploughing and/or milling.

6. A method according to any one of the preceding claims, **characterized by** cutting the plants before at least partly introducing the plant parts into the soil and at least partly introducing a plant cut into the soil.

7. A method according to any one of the preceding claims, **characterized in that** the plants are in the soil with their roots for at least 70 %, preferably at least 80 %, preferably at least 90 %, preferably at least 95 %, preferably at least 99 %, of a year.

8. A method according to any one of the preceding claims, **characterized by** determining the humus content of the soil before at least partly introducing the plant parts into the soil.

9. A method according to any one of the preceding claims, **characterized by** adjusting a magnesium-calcium ratio in sandy soils of between 60 wt% and 70 wt% of calcium and between 10 wt% and 20 wt% of magnesium and in clayey soils of between 65 wt% and 75 wt% of calcium and of between 5 wt% and 15 wt% of magnesium in the soil, if a previous magnesium-calcium ratio of the soil deviates therefrom.

10. A method according to any one of the preceding claims, **characterized by** sowing plant seeds and/or planting plants in the soil when the magnesium content and calcium content and/or the magnesium-calcium ratio of the soil each correspond to the target value.

11. A method according to any one of the preceding claims, **characterized by** sowing crop seeds and/or planting crops in the soil when the humus content of the soil corresponds to a target value.

12. A method according to any one of the preceding claims, **characterized by** influencing a carbon cycle to increase the humus content in the soil,
- in particular influencing, in particular increasing, photosynthesis of the plants, for example by increasing a carbon dioxide content of the ambient air and/or by adapting an ambient temperature of the plants thereto, and/or
- in particular influencing, in particular increasing, the release of carbonaceous products by the plants to the soil or soil organisms, and/or
- in particular influencing, in particular increasing, a carbon content in the soil.

## Revendications

1. Procédé pour augmenter la teneur en humus d'un sol, comprenant les étapes suivantes
- enfouir au moins partiellement dans le sol de parties de plantes enracinées se trouvant au-dessus des racines,
**caractérisé par**
- vérifier une teneur en magnésium du sol avant d'enfouir au moins partiellement les parties de plantes dans le sol,
- vérifier une teneur en calcium du sol avant d'enfouir au moins partiellement les parties de plantes dans le sol,
- ajuster une teneur en magnésium comprise entre 5 % et 20 % en poids dans le sol, si une teneur en magnésium antérieure du sol s'en écarte, et
- ajuster une teneur en calcium comprise entre 60 % et 75 % en poids dans le sol, si une teneur en calcium antérieure du sol s'en écarte.

2. Procédé selon la revendication 1, **caractérisé en ce que** les plantes sont des plantes d'engrais vert.

3. Procédé selon la revendication 1 ou 2, **caractérisé par** le contrôle d'une croissance et/ou d'un développement des plantes.

4. Procédé selon l'une quelconque des revendications précédentes, **caractérisé par** le soutien des plantes dans leur croissance et/ou leur développement avant d'enfouir au moins partiellement les parties de plantes dans le sol.

5. Procédé selon l'une quelconque des revendications précédentes, **caractérisé en ce que** le fait d'enfouir au moins partiellement des parties de plantes dans le sol est effectué mécaniquement, par exemple par labourage et/ou fraisage.

6. Procédé selon l'une quelconque des revendications précédentes, **caractérisé par** la coupe des plantes avant d'enfouir au moins partiellement les parties de plantes dans le sol et d'enfouir au moins partiellement une coupe de plantes dans le sol.

7. Procédé selon l'une quelconque des revendications précédentes, **caractérisé en ce que** les plantes se trouvent dans le sol avec leurs racines pendant au moins 70 %, de préférence au moins 80 %, de préférence au moins 90 %, de préférence au moins 95 %, de préférence au moins 99 %, d'une année.

8. Procédé selon l'une quelconque des revendications précédentes, **caractérisé par** le fait de déterminer la teneur en humus du sol avant d'enfouir au moins partiellement les parties de plantes dans le sol.

9. Procédé selon l'une quelconque des revendications précédentes, **caractérisé par** le fait d'établir un rapport magnésium-calcium dans le sol entre 60 % en poids et 70 % en poids de calcium et entre 10 % en poids et 20 % en poids de magnésium pour des sols sableux et entre 65 % en poids et 75 % en poids de calcium et entre 5 % en poids et 15 % en poids de magnésium pour des sols argileux, si un rapport magnésium-calcium précédent du sol s'en écarte.

10. Procédé selon l'une quelconque des revendications précédentes, **caractérisé par** le fait de semer de semences de plantes et/ou la planter de plantes dans le sol, lorsque la teneur en magnésium et la teneur en calcium et/ou le rapport magnésium-calcium du sol correspondent respectivement à la valeur de consigne.

11. Procédé selon l'une quelconque des revendications précédentes, **caractérisé par** le fait de semer de semences de plantes utiles et/ou planter de plantes utiles dans le sol, lorsque la teneur en humus du sol correspond à une valeur de consigne.

12. Procédé selon l'une quelconque des revendications précédentes, **caractérisé par** le fait d'agir sur un cycle du carbone pour augmenter la teneur en humus dans le sol,
- en particulier, influencer, en particulier augmenter, une photosynthèse des plantes, par exemple en augmentant une teneur en dioxyde de carbone de l'air ambiant et/ou en adaptant une température ambiante des plantes à celle-ci, et/ou
- en particulier, influencer, en particulier augmenter, une libération de produits carbonés par les plantes dans le sol ou les organismes vivants du sol, et/ou
- en particulier, influencer, en particulier augmenter, une teneur en carbone dans le sol.
